# EUROPEAN PATENT SPECIFICATION

(11) **EP 3 945 280 B1**
(45) Date of publication and mention of the grant of the patent: **27.03.2024**
(21) Application number: 21186471.5
(22) Date of filing: 19.07.2021
(51) Int. Cl.: G01B 11/02, G01C 5/00, G01C 5/06, G01C 15/00

(54) **CONSTRUCTION MEMBER MEASURING METHOD AND MEASUREMENT SYSTEM FOR THE METHOD**
VERFAHREN ZUR MESSUNG EINES BAUELEMENTS UND MESSSYSTEM FÜR DAS VERFAHREN
PROCÉDÉ DE MESURE D'ÉLÉMENT DE CONSTRUCTION ET PROCÉDÉ DE MESURE POUR LE PROCÉDÉ

(30) Priority: 28.07.2020 JP 2020126978
(43) Date of publication of application: 02.02.2022
(73) Proprietor: TOPCON CORPORATION, Tokyo 174-8580 (JP)
(72) Inventor: NISHITA, Nobuyuki, Tokyo, 174-8580 (JP)
(74) Representative: dompatent von Kreisler Selting Werner - Partnerschaft von Patent- und Rechtsanwälten mbB

(56) References cited:
- EP-A2- 3 401 638
- US-A1- 2018 284 235
- US-A1- 2020 096 333

## Description

### [Technical Field]

The present invention relates to a method of measuring a member spacing and a member thickness of a construction member at a construction work site, and a measurement system for the method.

### [Background Art]

In a construction work, for securing performance of a structure, construction management of construction members is very important. For example, in construction management of reinforcing bars of a structure, it is confirmed whether a reinforcing bar spacing and a reinforcing bar thickness are as designed, etc.

Patent Document 1 discloses calculation of a reinforcing bar spacing and a reinforcing bar thickness by analyzing a large number of point cloud data of a structure by using a three-dimensional laser scanner that performs dome scanning in the vertical direction and the horizontal direction with a pulse laser while gradually shifting the scanner measurement position. The document US 2020/096333 discloses a measurement system according to the state of the art.

### [Citation List]

### [Patent Literature]

[Patent Literature 1] Japanese Published Unexamined Patent Application No. 2010-261772

### [Summary of Invention]

### [Technical Problem]

However, in Patent Document 1, there is a problem in which elements other than reinforcing bars are detected by the pulse laser and are also acquired as point cloud data, so that post-processing to delete data of the elements other than reinforcing bars is required, and measurement results of the reinforcing bars as a construction management target cannot be immediately confirmed at the site. Moreover, there are also problems in that scanner installation when shifting the measurement position is troublesome and scanning time is long.

The present invention is to solve the above-described problems, and an object thereof is to provide a measuring method that enables scanning of only a member as a construction management target to solve the problems in installation and measurement time, and enables promptly acquiring measurement results on-site, and a measurement system for this method.

### [Solution to Problem]

In order to solve the problems described above, a measurement system according to claim 1 is provided.

According to the invention, the measurement system extracts only measurement points within a predetermined distance range from the three-dimensional measurement line on the three-dimensional space, and by using the extracted measurement points as the measurement points measured near the three-dimensional measurement line, calculates the measurement results.

In the aspect described above, it is also preferable that the measurement system continues the measurement of the three-dimensional measurement line repeatedly and always updates and displays the measurement results.

In the aspect described above, it is also preferable that a plurality of the measurement lines are set as the three-dimensional measurement line, and the respective three-dimensional measurement lines are measured in order.

In the aspect described above, it is also preferable that the measurement system designates three or more points as the designated points, calculates a cross section defined by the designated points on the three-dimensional space as a measurement area, and performs the non-prism distance measurement of the measurement area.

In the aspect described above, it is also preferable that the measurement system measures a temporary designated point that becomes the designated point by being extended by a known distance along a three-dimensional arbitrary straight-line direction, and calculates coordinates by correcting coordinates of the temporary designated point by a direction cosine of the extension straight-line direction and the known distance as the three-dimensional coordinates of the designated point.

In the aspect described above, it is also preferable that a temporary designated point different only in height direction from the designated point is measured, and coordinates are calculated as the three-dimensional coordinates of the designated point by changing all or at least one of the temporary designated points in height according to the designated point.

In the aspect described above, it is also preferable that measurement intervals of the measuring device are set to even intervals in a real space on the three-dimensional measurement line.

In the aspect described above, it is also preferable that an alarm is displayed when the measurement results are abnormal with respect to a design value.

In the aspect described above, it is also preferable that the measuring device is a scanner device configured to perform a non-prism distance measurement by measuring a time taken for reciprocation between distance-measuring light to the measurement point, and including a deflecting unit configured to deflect an output direction of the distance-measuring light with respect to a reference optical axis.

In the aspect described above, it is also preferable that the measuring device is a surveying instrument capable of performing a non-prism distance measurement from a phase difference between reflected distance-measuring light reflected from the measurement point and reference light.

In the aspect described above, it is also preferable that the designated point is designated by a target configured to enable offset observation of the designated point.

In order to solve the problems described above, a measuring method according to claim 12 is provided.

A measurement program describing the measuring method according to the aspect described above as a computer program to enable execution of the measuring method, is also preferable.

### [Effect of Invention]

According to the construction member measuring method and measurement system of the present invention, only a member as a construction management target is scanned, and measurement results can be promptly acquired on-site.

### [Brief Description of Drawings]

FIG. 1 is an on-site usage image view according to an embodiment of the present invention.
FIG. 2 is a configuration view of a measurement system according to a first embodiment.
FIG. 3 is a configuration block diagram of a measuring device according to the first embodiment.
FIG. 4 is a configuration block diagram of a distance-measuring unit according to the first embodiment.
FIG. 5 is an image view of scanning by the measuring device according to the first embodiment.
FIG. 6 is an image view of target search by the measuring device according to the first embodiment.
FIG. 7 is a flowchart illustrating a construction member measuring method according to the first embodiment.
FIG. 8A is an image view of a first-half work in the same measuring method.
FIG. 8B is an image view of a second-half work in the same measuring method.
FIG. 9 is a configuration view of a measurement system according to a second embodiment.
FIG. 10 is a configuration block diagram of a measuring device according to the second embodiment.
FIG. 11 is an image view of scanning according to Modification (1) of the embodiment.
FIG. 12 is a display example of measurement results according to Modification (1).
FIG. 13 is an image view of scanning according to Modification (2) of the embodiment.
FIG. 14 is a display example of measurement results according to Modification (2).
FIG.15 is an image view of scanning according to Modification (3) of the embodiment.
FIG. 16 is an on-site usage image view of a measurement system according to Modification (4) of the embodiment.
FIG. 17 is a configuration block diagram of a measurement system according to Modification (5) of the embodiment.
FIG. 18 is an on-site usage image view of the measurement system according to Modification (5) of the embodiment.
FIG. 19 is another on-site usage image view of the measurement system according to Modification (5).
FIG. 20 is an on-site usage image view of a measurement system according to Modification (6) of the embodiment.
FIG. 21 is an image view of scanning according to Modification (6).

### [Description of Embodiments]

Next, preferred embodiments of the present invention will be described with reference to the drawings.

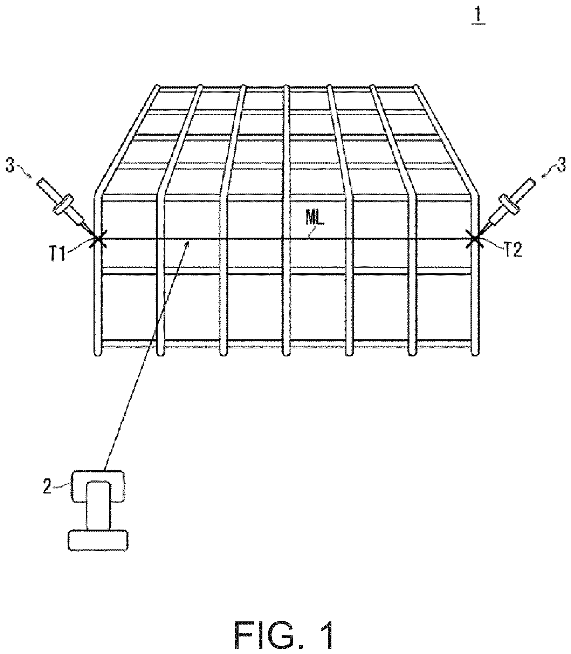

FIG. 1 is an on-site usage image view of a measurement system 1, common to multiple embodiments and modifications described below. As illustrated in FIG. 1, the measurement system 1 performs a measurement by using a measuring device 2 at a construction site, and scans as connecting "two points" on a three-dimensional space of a construction member (measuring target) as a construction management target by a straight line. The two points on the three-dimensional space are referred to as designated points T1 and T2, and the straight line on the three-dimensional space is referred to as a three-dimensional measurement line ML. The measurement system 1 calculates a member spacing and a member thickness of the measuring target from data on measurement points near the three-dimensional measurement line ML connecting the designated points T1 and T2, and promptly displays the measurement results as numerical values.

### (Measurement System of First Embodiment)

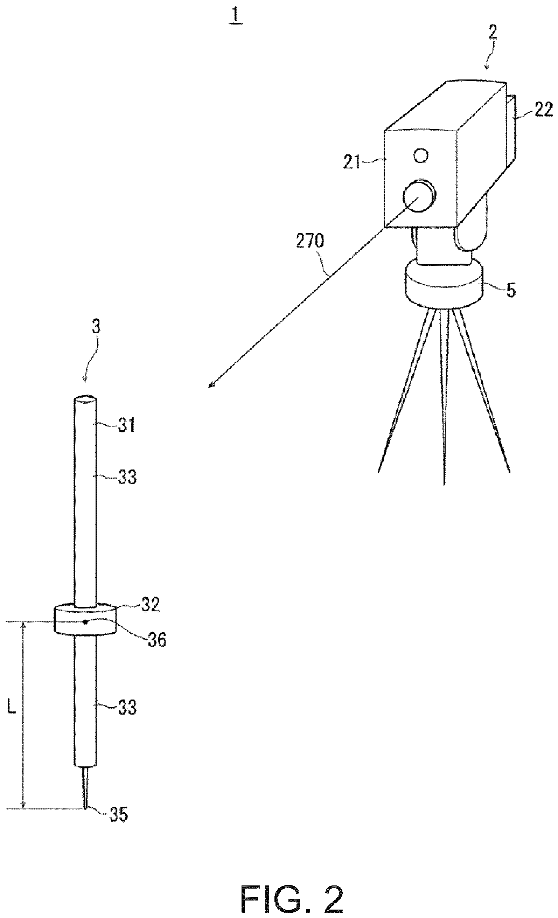

FIG. 2 is a configuration view of a measurement system 1 according to a first embodiment. The measurement system 1 includes a scanner device 2 and a target 3. The scanner device 2 is the "measuring device" in the present embodiment. The scanner device 2 is described first, and the target 3 will be described later.

### (Scanner Device)

As illustrated in FIG. 2, the scanner device 2 includes a Fresnel scanner 21 and a display unit 22. The Fresnel scanner 21 can deflect distance-measuring light 270 from a reference optical axis and output it as described later. The Fresnel scanner 21 is the "distance-measuring unit" in the present embodiment.

The scanner device 2 may have any device form as long as it includes at least the components described above. In FIG. 2, as an example, the scanner device 2 is installed by using a tripod, however, it can be arbitrarily installed, and may have either of a handy type device form in which it is held by a worker's hand or a UAV (Unmanned Air Vehicle) type device form in which autonomous flying is possible. In the present embodiment, the scanner device 2 includes a rotating table 5, and is configured so that a horizontal rotation angle and a vertical rotation angle of the scanner device 2 are grasped by two encoders disposed on the rotating table 5.

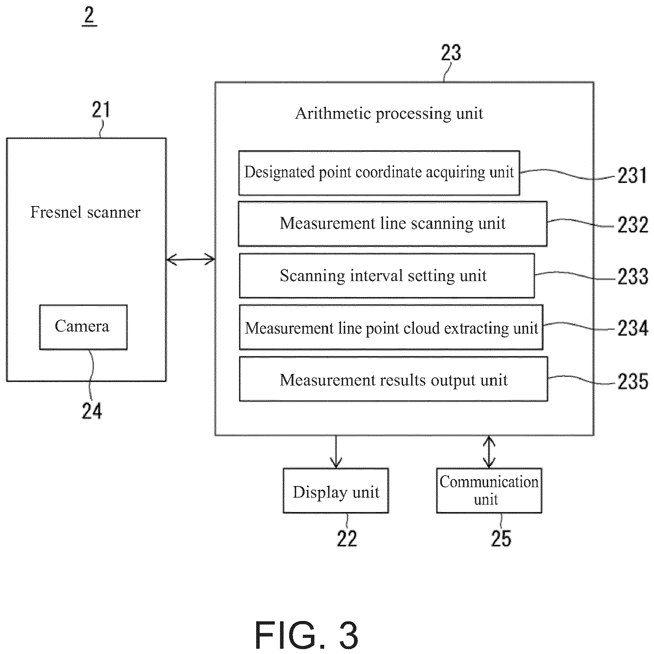

FIG. 3 is a configuration block diagram of a scanner device 2 (measuring device) according to the first embodiment. The scanner device 2 includes the above-described Fresnel scanner 21, the above-described display unit 22, an arithmetic processing unit 23, and as optional components, a camera 24 and a communication unit 25.

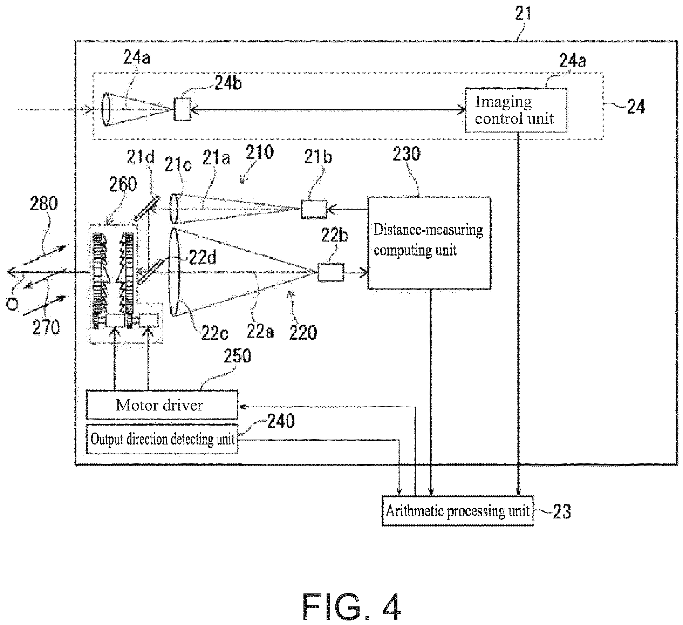

FIG. 4 is a configuration block diagram of the Fresnel scanner 21 (distance-measuring unit) in the scanner device 2. The Fresnel scanner 21 measures a measurement point by outputting a pulse laser (distance-measuring light 270) while deflecting from the reference optical axis O toward an arbitrary direction.

The Fresnel scanner 21 includes an output unit 210, a light receiving unit 220, a distance-measuring computing unit 230, an output direction detecting unit 240, a motor driver 250, and a deflecting unit 260.

The output unit 210 has an output optical axis 21a, and includes, for example, a light emitting element 21b of a laser diode (LD) and a projecting lens 21c on the output optical axis 21a. The light receiving unit 220 has a light receiving optical axis 22a, and includes, on the light receiving optical axis 22a, an imaging lens 22c and a light receiving element 22b such as, for example, a photodiode (PD) or the like. The output optical axis 21a matches the light receiving optical axis 22a by being deflected by a first reflective mirror 21d provided on the output optical axis 21a and a second reflective mirror 22d provided on the light receiving optical axis 22a. The output unit 210 outputs a pulse laser emitted from the light emitting element 21b as distance-measuring light 270. The light receiving unit 220 receives reflected distance-measuring light 280 from the measurement point, converts the distance-measuring light into a light receiving signal, and outputs the signal to the distance-measuring computing unit 230. Based on the light receiving signal, the distance-measuring computing unit 230 computes a distance to the measurement point by measuring a time taken for reciprocation between the pulse laser to the measurement point.

On the deflected output optical axis 21a and the light receiving optical axis 22a, the deflecting unit 260 is disposed. In the deflecting unit 260, an optical axis that penetrates through the center and is straight is a reference optical axis O, and the reference optical axis O matches the output optical axis 21a not deflected by the deflecting unit 260 and the light receiving optical axis 22a. The deflecting unit 260 includes a pair of optical prisms 26a and 26b. Each of the optical prisms 26a and 26b is formed of a succession of a plurality of Risley prisms (round wedge prisms). The plurality of Risley prisms are successive in a direction orthogonal to the light receiving optical axis 22a, and a Risley prism disposed at a central position deflects the distance-measuring light 270, and Risley prisms disposed at other positions deflect the reflected distance-measuring light 280.

A motor 26c enables the optical prism 26a and a motor 26d enables the optical prism 26b to respectively independently rotate around the light receiving optical axis 22a. The optical prisms 26a and 26b are controlled in angle independently of each other to deflect the distance-measuring light 270 from the reference optical axis O toward an arbitrary specific direction, and deflect the reflected distance-measuring light 280 to be parallel to the light receiving optical axis 22a.

The output direction detecting unit 240 computes rotating positions of the optical prisms 26a and 26b by counting driving pulses input to the motor driver 250 that drives the motors 26c and 26d or by using encoders, and computes an output direction of the distance-measuring light 270 based on refractive indexes and the rotating positions of the optical prisms 26a and 26b.

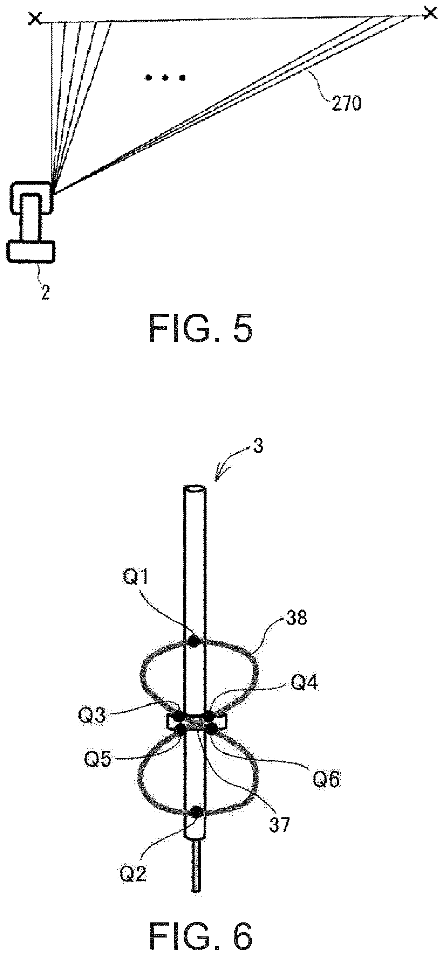

FIG. 5 is an image view of scanning (non-prism distance measurement) by the scanner device 2 (measuring device). In the scanner device 2, by controlling angles of the respective optical prisms 26a and 26b, the distance-measuring light 270 can be made to scan on an arbitrary straight line.

The arithmetic processing unit 23 is a microcontroller configured by mounting, for example, a CPU (Central Processing Unit), a RAM (Random Access Memory), or a ROM (Read Only Memory), etc., on an integrated circuit. The arithmetic processing unit 23 computes a horizontal angle and a vertical angle of each measurement point with respect to the reference optical axis O from the output direction of the distance-measuring light 270 obtained from the output direction detecting unit 240, and associates the horizontal angle and the vertical angle with distance-measurement data of the distance-measuring computing unit 230 to measure three-dimensional coordinates of each measurement point. Moreover, in the present embodiment, the arithmetic processing unit 23 further includes a designated point coordinate acquiring unit 231, a measurement line scanning unit 232, a scanning interval setting unit 233, a measurement line point cloud extracting unit 234, and a measurement results output unit 235. By these units, the arithmetic processing unit 23 calculates a member spacing and a member thickness of the measuring target from point cloud data near the three-dimensional measurement line ML connecting the designated points T1 and T2, and promptly outputs the measurement results as numerical values. Details will be described later.

The display unit 22 is, for example, a liquid crystal screen that enables touch-panel operations, and by the display unit 22, measurement settings, instructions, and measurement results confirmation can be performed.

The communication unit 25 is the optional component, and performs data transfer of measurement results output from the arithmetic processing unit 23 to an external terminal. For this communication, depending on the site, for example, Internet communication, wireless LAN, Bluetooth (registered trademark) communication, and wired communication, etc., can be used.

The camera 24 is the optional component, and is used when measurement results output from the arithmetic processing unit 23 are output by superimposing on a site image. The camera 24 is, as an example, incorporated in the Fresnel scanner 21 as illustrated in FIG. 4. The camera 24 includes an imaging device 24b and an imaging control unit 24c. The imaging device 24b is a CCD or CMOS sensor, and the position of each pixel is identified in a coordinate system with an origin set at the imaging optical axis 24a. The imaging control unit 24c synchronizes a timing of image acquisition of the camera 24 with a scanning timing of the Fresnel scanner 21. The arithmetic processing unit 23 performs image processing, etc., to superimpose measurement results on image data acquired by the camera 24. An image generated by the arithmetic processing unit 23 is displayed on the display unit 22.

### (Target)

Next, the target 3 will be described. However, the target 3 is used to facilitate the measurement of three-dimensional coordinates of the designated points T1 and T2 and improve accuracy of the measurement, and is not an essential component in the present embodiment. As illustrated in FIG. 2, as the target 3 in the present embodiment, a target for offset observation is preferably used which includes a supporting columnar pole 31, a discoid reference reflecting portion 32 having a reference point 36, and auxiliary reflecting portions 33 for measuring a tilt of the pole 31. However, the target is not limited to the form described above, and any target can be used as long as the target enables offset observation of the designated points T1 and T2 (observation for obtaining coordinates of a designated point by measuring a reference point offset by a known length and in a known direction from the designated point).

The reference reflecting portion 32 is provided at a middle of the pole 31, and a reflecting sheet is wound around the whole circumference. A reflecting sheet is intermittently wound in an axial direction of the pole 31 as well, and the portion around which this reflecting sheet is wound constitutes the auxiliary reflecting portions 33. A lower end portion 35 of the pole 31 is formed into a sharp end so as to point the designated point T1, T2. A diameter of the pole 31 is configured so as to change at the reference reflecting portion 32, and the upper side and the lower side of the target 3 can be identified based on the size of the auxiliary reflecting portions 33.

The reference reflecting portion 32 and the auxiliary reflecting portions 33 reflect distance-measuring light 270 from the scanner device 2. A center in the axial direction of the reference reflecting portion 25 is the reference point 36, and an offset distance L of the reference point 36 from the lower end portion 35 of the pole 31 is known.

FIG. 6 is an image view of searching for the target 3 by the scanner device 2. The scanner device 2 can form a figure-of-eight (two-dimensional closed loop) scanning pattern 38 in which an outward scanning path and a returning scanning path cross each other at a center (intersection 37) of the scanning pattern by setting a rotation ratio of the optical prisms 26a and 26b of the deflecting unit 260 to 1 . 2. When the intersection 37 of the scanning pattern is near the reference point 36 of the target 3, the scanning pattern 38 passes through an edge of the reference reflecting portion 32 in the outward scanning path and returning scanning path. By measuring target points Q3, Q4, Q5, and Q6 on the edge, the scanner device 2 can match the intersection 37 of the scanning pattern with the reference point 36. The scanner device 2 can also measure forward, rearward, leftward, and rightward tilts of the target 3 by measuring target points Q1 and Q2 on the auxiliary reflecting portions 33. When the intersection 37 of the scanning pattern is determined to be on the reference reflecting portion 32 of the target 3, by measuring the reference point 36 and considering the tilt of the target 3 and the offset distance L, the scanner device 2 measures three-dimensional coordinates of the designated points T1 or T2 by offset observation.

### (Measuring Method)

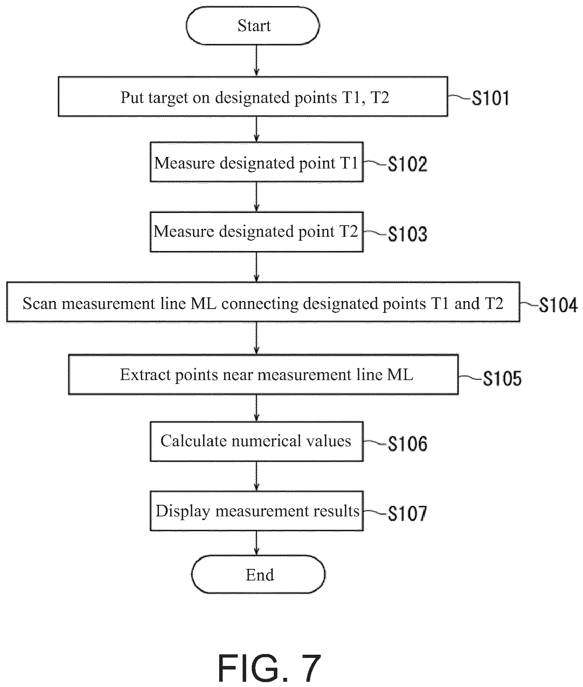

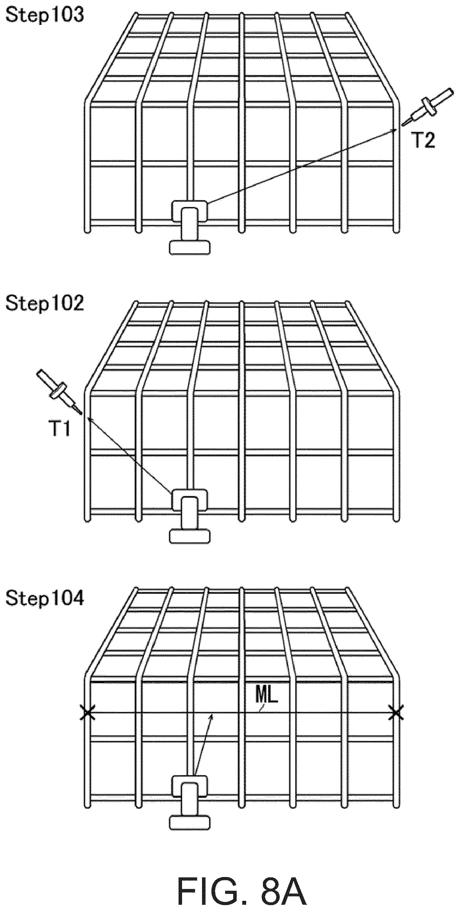

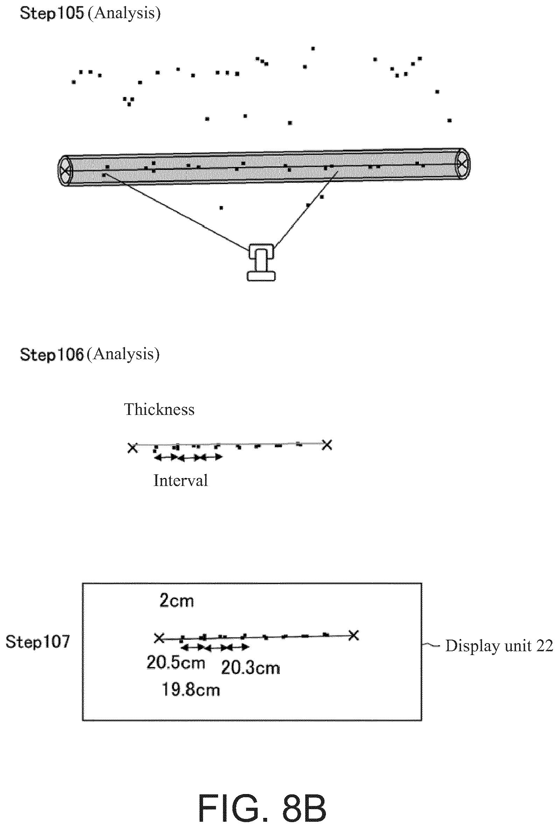

A construction member measuring method using the above-described measurement system 1 will be described. FIG. 7 is a flowchart illustrating a construction member measuring method according to the first embodiment, and FIG. 8A and FIG. 8B are working image views of the same measuring method.

When the measurement is started, the processing shifts to Step S101, and a first measurement worker brings the lower end portion 35 of the target 3 into contact with "two points," that is, the designated points T1 and T2 on the three-dimensional space of a member as a construction management target (which is a construction member constituting a structure, and may be a single construction member or a group of construction members. Hereinafter, referred to as a measuring target).

Next, the processing shifts to Step S102, and a second measurement worker starts a measurement by the scanner device 2. The designated point coordinate acquiring unit 231 of the scanner device 2 detects the reference point 36 of the target 3, and measures three-dimensional coordinates of the designated point T1 (refer to FIG. 8A) . When the scanner device 2 includes the camera 24, a configuration is also preferable in which a designated point detection time is shortened by tapping on the target 3 in a camera image.

Subsequently, the processing shifts to Step S103, and the designated point coordinate acquiring unit 231 of the scanner device 2 measures three-dimensional coordinates of the designated point T2 (refer to FIG. 8A).

Next, the processing shifts to Step S104, and the measurement line scanning unit 232 of the scanner device 2 calculates a three-dimensional measurement line ML connecting the designated points T1 and T2 on the three-dimensional space, and line-scans the three-dimensional measurement line ML by outputting distance-measuring light 270 while controlling the deflecting portion 260 from the designated point T2 toward the designated point T1 (or from the designated point T1 toward the designated point T2) (refer to FIG. 8A) . At this time, the scanning interval setting unit 233 preferably sets a scanning interval narrower than a thickness of the construction member so that the member as the measuring target can be detected by scanning. For example, in a case where the diameter of a reinforcing bar as a measuring target is 2 cm as a design value, when a measurement worker inputs the design value, the scanning interval setting unit 233 sets a scanning interval to be, for example, not more than 50% of the design value. The scanning interval must be set so that at least one measurement point strikes the member, and can be set to a desired value by controlling the relationship between a scanning speed and a pulse emission period of the distance-measuring light 270.

Next, the processing shifts to Step S105, and the measurement line point cloud extracting unit 234 of the scanner device 2 performs an analysis to extract only points within a predetermined distance range from the three-dimensional measurement line ML on the three-dimensional space from points obtained in Step S104. For example, as illustrated in FIG. 8B, in a case where measurement points p are acquired as illustrated when viewing the site from above, points within a predetermined distance in the respective X, Y, and Z directions from the three-dimensional measurement line ML in the coordinate system of the scanner device 2 (scanner coordinate system) (a three-dimensional space to be within the predetermined distance is represented as a predetermined range space q, and the predetermined distance can be set to an arbitrary value) are presumed to be reinforcing bars and are left, and other points (points outside the predetermined range space q) are determined to be other elements at the near side or the far side of the reinforcing bars, and are deleted.

Next, the processing shifts to Step S106, and the measurement results output unit 235 of the scanner device 2 calculates a point interval in the scanning direction (that is, in the three-dimensional measurement line ML direction) for each of the points left in Step S105, and determines an area via which points are away from each other as a member spacing of the measuring target, and determines an area of dense points as a member thickness of the measuring target, and calculates "numerical values" of the member spacing and/or the member thickness of the measuring target (FIG. 8B).

Next, the processing shifts to Step S107, and the measurement results output unit 235 displays the "measurement results" calculated in Step S106, that is, the "numerical values" of the member spacing and/or the member thickness of the measuring target on the display unit 22 (refer to FIG. 8B) . At this time, when the scanner device 2 includes the camera 24, the above-described numerical values may be displayed by superimposing on a camera image. Moreover, when the scanner device 2 includes the communication unit 25, the above-described numerical values may be data-transferred to an external terminal. It is also preferable that, when the measurement results (numerical values) exceed an acceptable error range of the design value, an alarm is displayed on the display unit 22.

### (Effect)

As described above, according to the measurement system 1 of the present embodiment, by designating two points on a three-dimensional space with respect to a measuring target and performing scanning measurement in a pattern connecting the two points by a straight line, only a member as a construction management target can be scanned. Therefore, post-processing in which data is brought back from the site and data other than data on the measuring target is deleted, is no longer required, so that measurement results (numerical values) concerning the measuring target can be promptly confirmed at the site.

In addition, according to the measurement system 1 of the present embodiment, the scanner device 2 performs scanning only on the straight line connecting the designated points T1 and T2, so that the measurement time is much shorter than that for scanning of a wide range while shifting the measurement position of the device. Moreover, numerical values are calculated on a three-dimensional space in the scanner coordinate system, so that the scanner coordinate system does not need to match the earth coordinate system, and therefore, instrument installation is arbitrary, and the trouble of installation can be eliminated.

### (Measurement System of Second Embodiment)

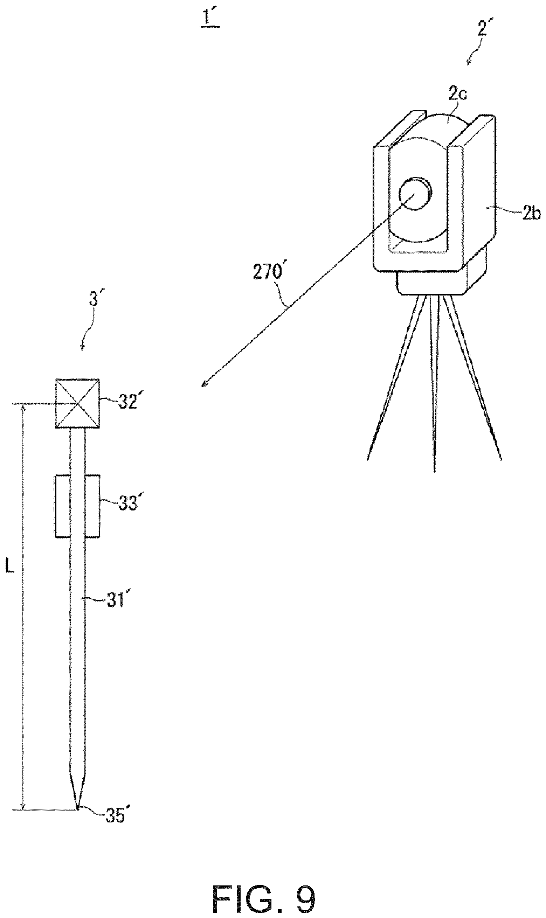

FIG. 9 is a configuration view of a measurement system 1' according to a second embodiment. The measurement system 1' includes a surveying instrument 2' and a target 3'. The surveying instrument 2' is the "measuring device" in the present embodiment. An on-site usage image of the measurement system 1' is the same as FIG. 1. For the same components as in the first embodiment, the same reference signs are cited, and descriptions of these are omitted.

### (Measuring Device)

The surveying instrument 2' is a total station. The surveying instrument 2' is installed by using a tripod. The surveying instrument 2' includes a base portion provided on a leveling device, a bracket portion 2b that rotates horizontally on the base portion, and a telescope 2c that rotates vertically at the center of the bracket portion 2b.

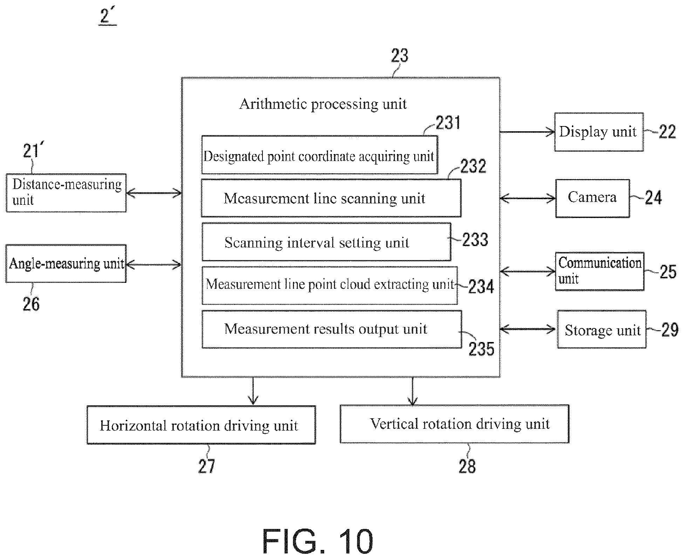

FIG. 10 is a configuration block diagram of the surveying instrument 2' (measuring device) according to the second embodiment. The surveying instrument 2' includes a distance-measuring unit 21', an angle-measuring unit 26, a horizontal rotation driving unit 27 of the bracket portion 2b, a vertical rotation driving unit 28 of the telescope 2c, a storage unit 29, the above-described display unit 22, the above-described arithmetic processing unit 23, and as optional components, the above-described camera 24 and communication unit 25.

The horizontal rotation driving unit 27 and the vertical rotation driving unit 28 are motors, and are controlled by the arithmetic processing unit 23. The angle-measuring unit 26 is encoders respectively provided on a rotary shaft of the bracket portion 2b and a rotary shaft of the telescope 2c. The distance-measuring unit 21' includes a light emitting element, a light transmitting optical system, a light receiving optical system, and a light receiving element. The distance-measuring unit 21' outputs distance-measuring light 270' such as an infrared laser toward a measurement point, and receives reflected distance-measuring light from the measurement point by the light receiving element. The arithmetic processing unit 23 calculates a distance measurement value to the measurement point based on a phase difference between the reflected distance-measuring light and reference light having advanced along a reference light path provided inside the optical systems . Moreover, from a detection value of the angle-measuring unit 26 at the time of distance measurement, the arithmetic processing unit 23 calculates an angle measurement value of the measurement point. The storage unit 29 consists of, for example, a memory card, an HDD, etc. In the storage unit 29, a survey program to be executed by the arithmetic processing unit 23 is stored. Moreover, various information acquired by the arithmetic processing unit 23 is recorded.

The surveying instrument 2' can perform both of a prism distance measurement targeting a prism, and a non-prism distance measurement targeting a measurement point other than a prism.

### (Target)

The target 3' in the present embodiment is used to facilitate the measurement of three-dimensional coordinates of designated points T1 and T2 and improve accuracy of the measurement, and is not an essential component in the present embodiment. As the target 3', the target 3 for offset observation illustrated in FIG. 2 may be used, and any other target may be used as long as it enables offset observation. As an example, the target 3' of the present embodiment has a support rod 31' including a reflector 32' as illustrated in FIG. 9. The reflector 32' may be a retroreflective prism or a reflecting sheet. A tip end portion 35' of the support rod 31' is a sharp end so as to point the designated point T1, T2. A distance L between the tip end portion 35' and a reflection center of the reflector 32' is known, and forward, rearward, leftward, and rightward tilts of the support rod 31' are measured by a tilt sensor 33' (for example, a triaxial accelerometer or an inclinometer sheet with which an image analysis of an inclination angle with respect to a visual line direction can be made).

### (Measuring Method)

A construction member measuring method using the above-described measurement system 1' will be described. A flow illustrating the construction member measuring method of the present embodiment and a working image of the same measuring method are the same as FIG. 7. Description is given by citing the flow in FIG. 7.

When the measurement is started, the processing shifts to Step S101, and a first measurement worker brings the tip end 35' of the target 3' into contact with "two points," that is, the designated points T1 and T2 on the three-dimensional space of a member (measuring target) as a construction management target.

Next, the processing shifts to Step S102, and a second measurement worker directs the surveying instrument 2' to the designated point T1. The designated point coordinate acquiring unit 231 of the surveying instrument 2' performs a prism distance measurement or a non-prism distance measurement of the target 3' to measure three-dimensional coordinates of the designated point T1. Similarly, in Step S103, three-dimensional coordinates of the designated point T2 are measured.

Next, the processing shifts to Step S104, and the measurement line scanning unit 232 of the surveying instrument 2' calculates a three-dimensional measurement line ML connecting the designated points T1 and T2 on the three-dimensional space, outputs distance-measuring light 270' while controlling angles of the horizontal rotation driving unit 27 and the vertical rotation driving unit 28, and performs a plurality of non-prism distance measurements on the three-dimensional measurement line ML. At this time, in order to detect the measuring target in the non-prism distance measurement, the scanning interval setting unit 233 preferably sets the angles of the horizontal rotation driving unit 27 and the vertical rotation driving unit 28 so that the measurement interval of the distance-measuring light 270' becomes narrower than the thickness of the construction member.

Next, the processing shifts to Step S105, and the measurement line point cloud extracting unit 234 of the surveying instrument 2' performs an analysis to extract only points within a predetermined distance range from the three-dimensional measurement line ML on the three-dimensional space from points obtained in Step S104.

Next, the processing shifts to Step S106, and the measurement results output unit 235 of the surveying instrument 2' calculates a point interval in the scanning direction (that is, in the three-dimensional measurement line ML direction) for each of the points left in Step S105, and calculates "numerical values" of a member spacing and/or a member thickness of the measuring target.

Next, the processing shifts to Step S107, and the measurement results output unit 235 of the surveying instrument 2' displays the "measurement results" calculated in Step S106, that is, the "numerical values" of the member spacing and/or the member thickness of the measuring target on the display unit 22. At this time, when the surveying instrument 2' includes the camera 24, the above-described numerical values may be displayed by superimposing on a camera image. Moreover, when the surveying instrument 2' includes the communication unit 25, the above-described numerical values may be data-transferred to an external terminal. It is also preferable that, when the measurement results (numerical values) exceed an acceptable error range of the design value, an alarm is displayed on the display unit 22.

### (Effect)

As above, according to the measurement system 1' of the present embodiment, even when the scanner device 2 is replaced with the surveying instrument 2', only a member as a construction management target can be scanned. Therefore, measurement results (numerical values) related to the measuring target can be promptly confirmed at the site.

### (Preferred Modifications)

Next, multiple preferred modifications applicable to the first and second embodiments described above will be given. Hereinafter, an example to be applied to the first embodiment is given as a representative. The same components as in the first embodiment are provided with the same reference signs, and description of these are omitted.

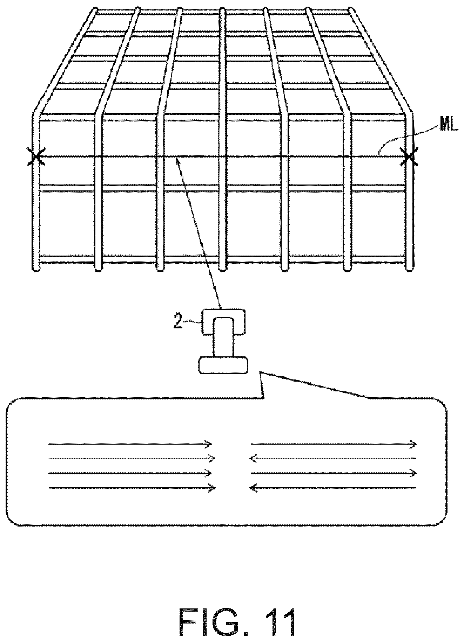

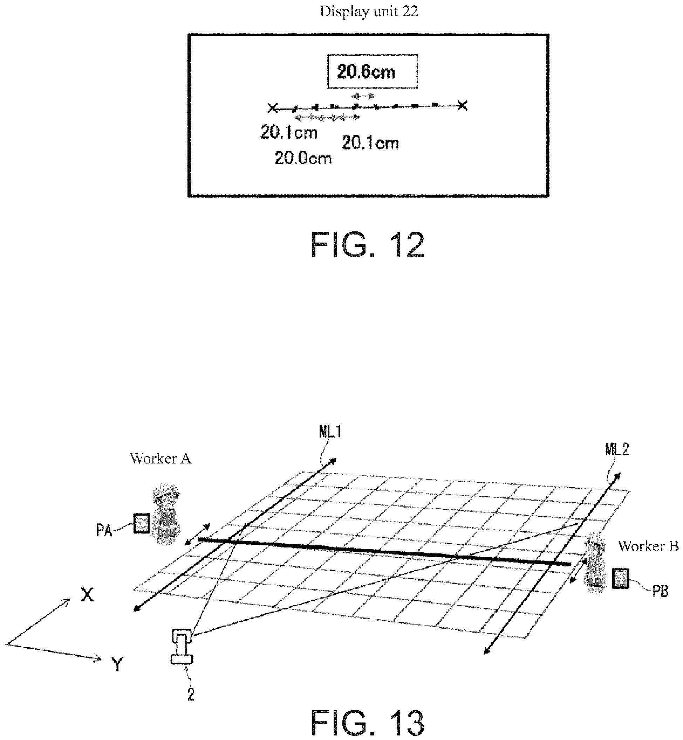

FIG. 11 is an image view of scanning according to Modification (1) of the embodiment, and FIG. 12 is a measurement results display example according to Modification (1). A measurement system 1 according to Modification (1) scans the three-dimensional measurement line ML multiple times in a reciprocating manner. This reciprocating scanning may be repetitive scanning or repetition of unidirectional scanning. Modification (1) is effective particularly for positioning of a member under construction. According to Modification (1), by continuing scanning by the reciprocating scanning, a member spacing of a member under construction is instantaneously output to the display unit 22. Therefore, by checking a displayed numerical value, whether the member under construction has a member spacing equal to, longer than, or shorter than a design value can be found in real time. Therefore, it becomes possible to perform construction while making adjustment by checking numerical values of the measurement results. Moreover, by averaging measurement results obtained through the reciprocating scanning, an advantage in that the measurement accuracy is improved can also be provided. In Modification (1), data transfer to a terminal that a construction worker carries is also preferable. It is also preferable to give an alarm by displaying measurement results in different colors according to a degree of deviation from the design value.

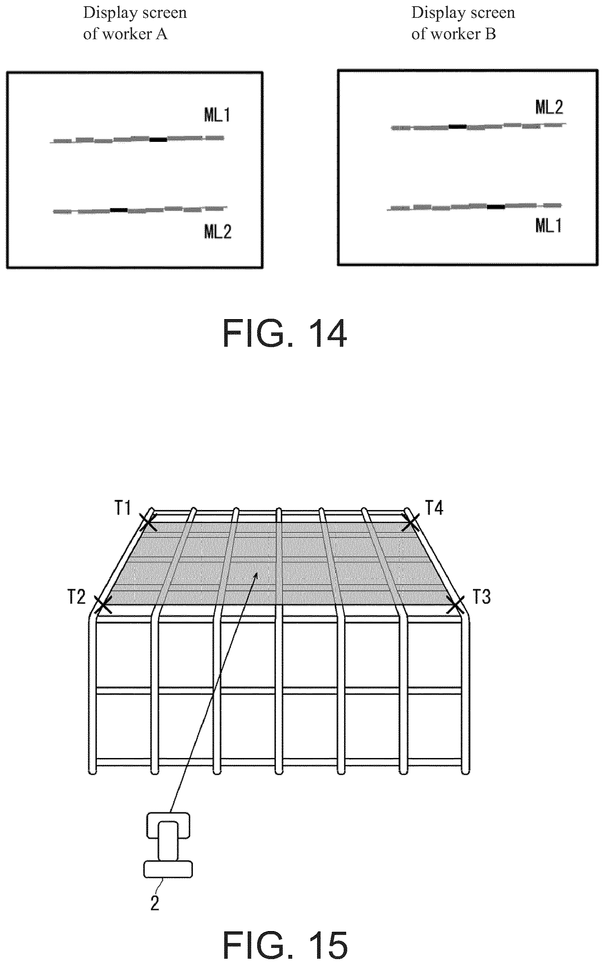

FIG. 13 is an image view of scanning according to Modification (2) of the embodiment, and FIG. 14 is a display example of measurement results according to Modification (2) . A measurement system 1 according to Modification (2) sets a plurality of three-dimensional measurement lines ML1, ML2, ... and scans these in order. The measurement system 1 according to Modification (2) is also effective for positioning of a member under construction. An example is illustrated in FIG. 13. A worker A and a worker B are constructing a reinforcing bar C to be laid along the Y direction in a construction work of installing reinforcing bars in a grid pattern on the XY plane. In this case, along the X direction, the measurement line ML1 is set on the worker A side, the measurement line ML2 is set on the worker B side, and the measurement lines ML1 and ML2 are alternately measured and measurement results of the measurement lines ML1 and ML2 are displayed on a terminal PA of the worker A and a terminal PB of the worker B. According to Modification (2), a construction work can be easily performed by a plurality of workers.

FIG. 15 is an image view of scanning according to Modification (3) of the embodiment. A measurement system 1 according to Modification (3) designates "three or more" points as designated points and performs area scanning. FIG. 15 illustrates a case where four points are designated as designated points T1, T2, T3, and T4 are designated. In Modification (3), in Step S104 in FIG. 7, the measurement line scanning unit 232 of the scanner device 2 calculates a cross section defined by the designated points T1, T2, T3, and T4 on the three-dimensional space as a measurement area MA, and unicursally scans the inside of the measurement area MA. Subsequently, in Step S105 in FIG. 7, the measurement line point cloud extracting unit 234 performs an analysis to extract only points within a predetermined distance range from the measurement area MA on the three-dimensional space from points obtained in Step S104. According to Modification (3), the measurement can be expanded from over a line to an area, and results of the measurement can be promptly confirmed at the site.

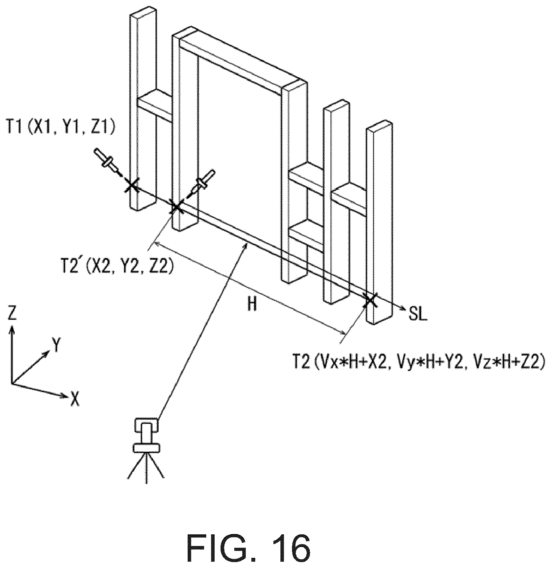

FIG. 16 is an on-site usage image view of a measurement system 1 according to Modification (4) of the embodiment. The measurement system 1 according to Modification (4) is effective in a case where it is desired to extend the positions of both or one of the designated points T1 and T2 in a three-dimensional arbitrary straight-line direction and measure the extended positions. FIG. 16 illustrates an example in which there is a physical obstacle at a point originally desired to be designated as the designated point T2, and the target 3 cannot be brought into contact with the point. In this case, in Step S101 in FIG. 7, a first measurement worker brings the target 3 into contact with a temporary designated point T2' at a position that becomes the designated point T2 by being shifted by a known distance H in the direction of a three-dimensional arbitrary straight line SL. Then, in Step S103, the designated point coordinate acquiring unit 231 of the scanner device 2 acquires three-dimensional coordinates (X2, Y2, Z2) of the temporary designated point T2' , and by using a direction cosine (Vx, Vy, Vz) of the three-dimensional arbitrary straight line SL, measures (Vx×H+X2, Vy×H+Y2, Vz×H+22) as three-dimensional coordinates of the designated point T2. According to Modification (4), the degree of freedom in setting of the three-dimensional measurement line ML increases, and a portion for which more data is desired can be easily measured. The distance H may be designated, or extension to a measurement limit of the scanner device 2 is possible.

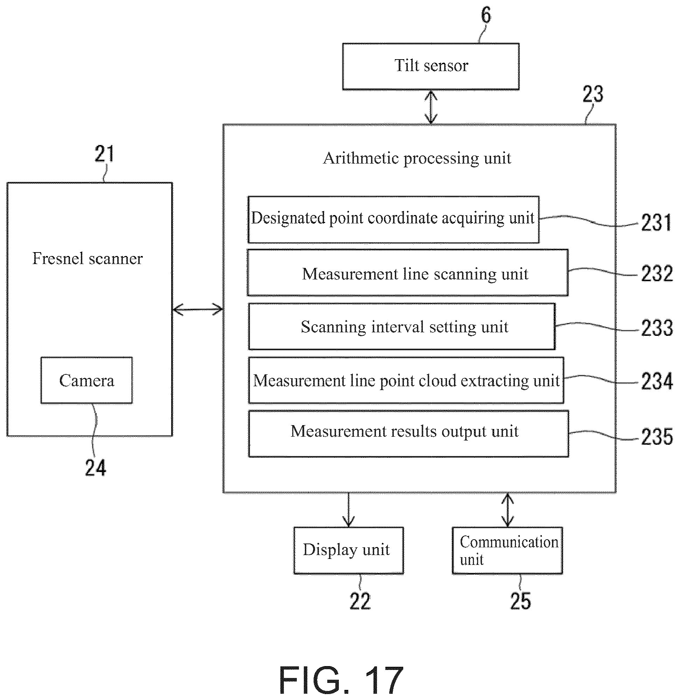

FIG. 17 is a configuration block diagram of a measurement system 1 according to Modification (5) of the embodiment. The measurement system 1 according to Modification (5) further includes a tilt sensor 6 when its measuring device is a scanner device 2. In Modification (5), the scanner device 2 needs to be installed by using a tripod or the like, and the tilt sensor 6 is disposed on a rotating table 5 (when the measuring device is a surveying instrument 2', the surveying instrument originally includes a tilt sensor in many cases) . The designated point coordinate acquiring unit 231 of the scanner device 2 grasps verticality of the scanner device 2 based on tilt posture information of the tilt sensor 6, and measures a height (Z) of a scanner coordinate system. The measurement system 1 according to Modification (5) is effective when it is desired to change both or one of the designated points T1 and T2 in height. According to Modification (5), the degree of freedom in setting of the three-dimensional measurement line ML increases, and a portion for which more data is desired can be easily measured.

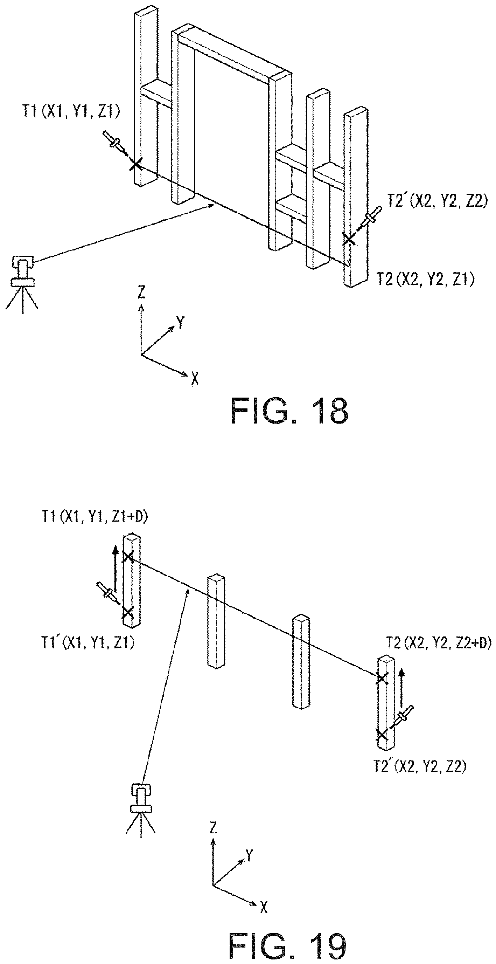

FIG. 18 is an on-site usage image view of the measurement system 1 according to Modification (5) of the embodiment. FIG. 18 illustrates an example in which there is a physical obstacle at a point originally desired to be designated as the designated point T2, and the target 3 cannot be brought into contact with the point. In this case, in Step S101 in FIG. 7, a first measurement worker brings the target 3 into contact with a temporary designated point T2' at a position shifted in the height direction (Z direction) from the designated point T2. Then, in Step S103, the designated point coordinate acquiring unit 231 of the scanner device 2 acquires three-dimensional coordinates (X2, Y2, Z2) of the temporary designated point T2', matches the Z coordinate of the temporary designated point T2' with the Z coordinate (Z1) of the designated point T1, and measures three-dimensional coordinates (X2, Y2, "Z1") as the designated point T2. It is also possible that Modification (5) described later is combined with Modification (4), and the target 3 is brought into contact with a position shifted by the height D from the temporary designated point T2', and coordinates of the temporary designated point T2' of Modification (4) are acquired by the method of Modification (5).

FIG. 19 is another on-site usage image view of the measurement system 1 according to Modification (5). FIG. 19 illustrates an example in which it is difficult to bring the target 3 into contact with positions originally desired to be designated as the designated points T1 and T2. In this case, in Step S101 in FIG. 7, a first measurement worker brings the target 3 into contact with temporary designated points T1' and T2' at positions shifted by a known height D from the designated points T1 and T2. Then, in Steps S102 and S103, the designated point coordinate acquiring unit 231 of the scanner device 2 acquires three-dimensional coordinates (X1, Y1, Z1) of the temporary designated point T1' and three-dimensional coordinates (X2, Y2, Z2) of the temporary designated point T2', adds the height D to the Z coordinate of the temporary designated point T1' and measures three-dimensional coordinates (X1, Y1, "Z1+D") as three-dimensional coordinates of the designated point T1, and similarly, measures three-dimensional coordinates (X2, Y2, "Z2+D") as three-dimensional coordinates of the designated point T2. The height D can be not only added but also subtracted.

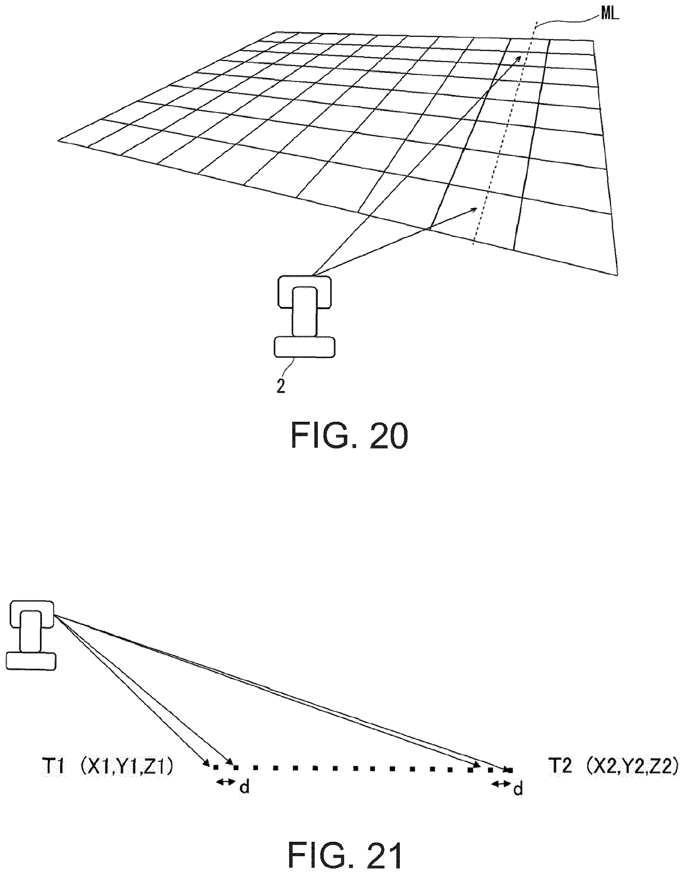

FIG. 20 is an on-site usage image view of a measurement system 1 according to Modification (6) of the embodiment, and FIG. 21 is an image view of scanning according to Modification (6). A measurement system 1 according to Modification (6) is effective particularly in the case where, as illustrated in FIG. 20, the three-dimensional measurement line ML is set in a far-and-near direction from the scanner device 2. When scanning is performed at regular scanning intervals, that is, when a light output angle is controlled at regular intervals, as scanning goes from the near side to the far side on the three-dimensional measurement line ML, point-to-point intervals at the far side are acquired to be wider than point-to-point intervals at the near side. Therefore, in Modification (6), when a numerical value of the measurement interval is designated as "d, " the scanning interval setting unit 233 of the scanner device 2 changes the scanning interval so that a position obtained by dividing the section between the designated points T1 and T2 by the interval d is set as a measurement point, and as illustrated in FIG. 21, controls the light output angle so that the measurement points can be acquired at the intervals d in a real space on the three-dimensional measurement line ML. According to Modification (6), points on the three-dimensional measurement line ML can be obtained regardless of apparent angles from the scanner device 2, so that occurrence of errors in numerical values of measurement results can be prevented.

Although embodiments and modifications of a preferred measuring method and a measurement system of the present invention have been described above, each of the embodiments and each of the modifications can be combined based on the knowledge of a person skilled in the art, and such combined embodiments are also included in the scope of the present invention as defined by the claims. In addition, the descriptions are given by using reinforcing bars as an example of a member that is a construction management target in the embodiments and modifications, however, as a matter of course, other construction members such as a steel frame, light-gauge steel, etc., can be set as a measuring target.

### [Reference Signs List]

- 1, 1': Measurement system
- 2: Scanner device (measuring device)
- 2': Surveying instrument (measuring device, distance-measuring unit)
- 21: Fresnel scanner (distance-measuring unit)
260 Deflecting unit
270 Distance-measuring light
280 Reflected distance-measuring light
- 22: Display unit
- 23: Arithmetic processing unit
24 Camera
25 Communication unit
3 Target
36 Reference point

## Claims

1. A measurement system (1,1'), for measuring a member spacing and a member thickness of a construction member at a construction work site, comprising
a scanner device (2) including a distance-measuring unit (21) configured to perform scanning a distance and an angle to a measurement point by measuring a time taken for reciprocation between a distance-measuring light (270) to the measurement point,
one or more construction members constituting a structure are regarded as a measuring target,
the measurement system (1,1') is configured to:
scan three-dimensional coordinates of two or more designated points designated by a measurement worker on a three-dimensional space with respect to the measuring target,
calculate a three-dimensional measurement line (ML) connecting the designated points on the three-dimensional space and line-scan on the three-dimensional measurement line by outputting the distance-measuring light (270), extract only point cloud data within a predetermined distance range from the three-dimensional measurement line (ML) on the three-dimensional space, and
by using the extracted point cloud data, determine an area via which points are away from each other as a member spacing of the measuring target, and determine an area of dense points as a member thickness of the measuring target, and calculate numerical values of the member spacing and/or the member thickness,
and display the numerical values of the member spacing and/or the member thickness on a display unit (22).

2. The measurement system according to Claim 1, wherein the measurement system is configured to continue the measurement of the three-dimensional measurement line repeatedly and always update and display the measurement results.

3. The measurement system according to Claim 1, wherein the measurement system is configured to set a plurality of the three-dimensional measurement lines, and measure each of the three-dimensional measurement lines in order.

4. The measurement system according to Claim 1, wherein the measurement system is configured to designate three or more points as the designated points, calculate a cross section defined by the designated points on the three-dimensional space as a measurement area, and perform the non-prism measurement of the measurement area.

5. The measurement system according to Claim 1, wherein the measurement system is configured to measure a temporary designated point that becomes the designated point by being extended by a known distance along a three-dimensional arbitrary straight-line direction, and calculate coordinates as the three-dimensional coordinates of the designated point by correcting coordinates of the temporary designated point by a direction cosine of the extension straight-line direction and the known distance.

6. The measurement system according to Claim 1, wherein the measurement system is configured to measure a temporary designated point different only in height direction from the designated point, and calculate coordinates as the three-dimensional coordinates of the designated point by changing all or at least one of the temporary designated points in height according to the designated point.

7. The measurement system according to Claim 1, wherein the measurement system is configured to set measurement intervals of the measuring device to even intervals in a real space on the three-dimensional measurement line.

8. The measurement system according to Claim 1, wherein the measurement system is configured to display an alarm when the measurement results are abnormal with respect to a design value.

9. The measurement system according to any of Claims 1 to 8, wherein the measuring device is a scanner device configured to perform a non-prism distance measurement by measuring a time taken for reciprocation between distance-measuring light to the measurement point, and including a deflecting unit configured to deflect an output direction of the distance-measuring light with respect to a reference optical axis.

10. The measurement system according to any of Claims 1 to 8, wherein the measuring device is a surveying instrument capable of performing a non-prism distance measurement from a phase difference between reflected distance-measuring light reflected from the measurement point and reference light.

11. The measurement system according to Claim 9 or 10, wherein the designated point is designated by a target configured to enable offset observation of the designated point.

12. A measuring method for measuring a member spacing and a member thickness of a construction member at a construction work site, comprising:
a step of designating one or more construction members constituting a structure are regard as a measuring target;
a step of scanning using a scanner device (2) three-dimensional coordinates of two or more designated points designated by a measurement worker on a three-dimensional space with respect to the measuring target,;
a step of calculating a three-dimensional measurement line (ML) connecting the designated points on the three-dimensional space and line-scans on the three-dimensional measurement line by outputting the distance-measuring light (270),;
a step of extracting only point cloud data within a predetermined distance range from the three-dimensional measurement line (ML) on the three-dimensional space,;
a step of by using the extracted point cloud data, determining an area via which points are away from each other as a member spacing of the measuring target, and determining an area of dense points as a member thickness of the measuring target, and calculating numerical values of the member spacing and/or the member thickness; and
a step of displaying the numerical values of the member spacing and/or the member thickness results on a display unit (22).

13. A computer program to enable the execution of the measuring method of claim 12 when performed on a measurement system according to claim 1.

## Patentansprüche

1. Messsystem (1, 1') zum Messen eines Elementabstands und einer Elementdicke eines Bauelements auf einer Baustelle, mit:
einer Scanner-Vorrichtung (2), die eine Entfernungsmesseinheit (21) aufweist, die dazu ausgebildet ist, eine Entfernung und einen Winkel zu einem Messpunkt durch Messen einer Zeit abzutasten, welche eine Bewegung eines Entfernungsmesslichts (270) zu und von dem Messpunkt benötigt,
wobei ein oder mehr Bauelemente, die eine Struktur bilden, als ein Messziel angesehen werden,
wobei das Messsystem (1, 1') ausgebildet ist, um
dreidimensionale Koordinaten von zwei oder mehr festgelegten Punkten abzutasten, welche von einem Messarbeiter in einem dreidimensionalen Raum in Bezug auf das Messziel festgelegt wurden,
eine dreidimensionale Messlinie (ML) zu berechnen, welche die festgelegten Punkte in dem dreidimensionalen Raum verbindet, und eine Zeilenabtastung auf der dreidimensionalen Messlinie durch Ausgeben des Entfernungsmesslichts (270) durchzuführen,
nur Punktwolkendaten innerhalb eines vorbestimmten Entfernungsbereichs von der dreidimensionalen Messlinie (ML) in dem dreidimensionalen Raum zu extrahieren, und
unter Verwendung der extrahierten Punktwolkendaten, einen Bereich, durch welchen Punkte voneinander beabstandet sind, als einen Elementabstand des Messziels zu bestimmen, und ein Bereich mit dichten Punkten als eine Elementdicke des Messziels zu bestimmen, und numerische Werte des Elementabstands und/oder der Elementdicke zu berechnen,
und die numerischen Werte des Elementabstands und/oder der Elementdicke auf einer Anzeigeeinheit (22) anzuzeigen.

2. Messsystem nach Anspruch 1, bei welchem das Messsystem dazu ausgebildet ist, das wiederholte Messen der dreidimensionalen Messlinie fortzusetzen und die Messergebisse fortlaufend zu aktualisieren und anzuzeigen.

3. Messsystem nach Anspruch 1, das Messsystem dazu ausgebildet ist, mehrere dreidimensionale Messlinien einzustellen und jede der dreidimensionalen Messlinien der Reihe nach zu messen.

4. Messsystem nach Anspruch 1, bei welchem das Messsystem dazu ausgebildet ist, drei oder mehr Punkte als die festgelegten Punkte zu bezeichnen, einen durch die festgelegten Punkte in dem dreidimensionalen Raum definierten Querschnitt als Messbereich zu berechnen, und die Nicht-Prismen-Messung des Messbereichs durchzuführen.

5. Messsystem nach Anspruch 1, bei welchem das Messystem dazu ausgebildet ist, einen vorläufigen festgelegten Punkt zu messen, welcher der festgelegte Punkt wird, indem er um eine bekannte Strecke entlang einer dreidimensionalen, beliebigen Geradenrichtung erweitert wird, und Koordinaten als die dreidimensionalen Koordinaten des festgelegten Punkts durch Korrigieren von Koordinaten des vorläufigen festgelegten Punkts durch einen Richtungskosinus der Verlängerungsgeradenrichtung und die bekannte Strecke zu berechnen.

6. Messystem nach Anspruch 1, bei welchem das Messsystem dazu ausgebildet ist, einen vorläufigen festgelegten Punkt, der sich nur in der Höhenrichtung von dem festgelegten Punkt unterscheidet, und die Koordinaten als die dreidimensionalen Koordinaten des festgelegten Punkts durch Ändern sämtlicher oder zumindest eines der vorläufigen festgelegten Punkte in der Höhe entsprechend dem festgelegten Punkt zu berechnen.

7. Messsystem nach Anspruch 1, bei welchem das Messsystem dazu ausgebildet ist, Messintervalle der Messvorrichtung auf gleiche Intervalle in einem echten Raum auf der dreidimensionalen Messlinie einzustellen.

8. Messsystem nach Anspruch 1, bei welchem das Messsystem dazu ausgebildet ist, eine Warnung anzuzeigen, wenn die Messergebnisse in Bezug auf einen Designwert abnormal sind.

9. Messsystem nach einem der Ansprüche 1 bis 8, bei welchem die Messvorrichtung eine Scanner-Vorrichtung ist, die dazu ausgebildet ist, eine Nicht-Prismen-Entfernungsmessung durch Messen einer Zeit durchzuführen, welche eine Bewegung eines Entfernungsmesslichts zu und von dem Messpunkt benötigt, und eine Ablenkeinheit aufweist, die dazu ausgebildet ist, eine Ausgaberichtung des Entfernungsmesslichts in Bezug auf eine optische Bezugsachse abzulenken.

10. Messsystem nach einem der Ansprüche 1 bis 8, bei welchem die Messvorrichtung ein Vermessungsinstrument ist, eine Nicht-Prismen-Entfernungsmessung anhand einer Phasendifferenz zwischen reflektiertem Entfernungsmesslicht, welches von dem Messpunkt reflektiert wird, und Referenzlicht durchzuführen.

11. Messsystem nach Anspruch 9 oder 10, bei welchem der festgelegte Punkt durch ein Ziel festgelegt ist, das dazu ausgebildet ist, eine Offset-Beobachtung des festgelegten Punkts zu ermöglichen.

12. Messverfahren zum Messen eines Elementabstands und einer Elementdicke eines Bauelements auf einer Baustelle, mit:
einem Schritt des Festlegens eines oder mehrerer, eine Struktur bildender Bauelemente, die als ein Messziel angesehen werden;
einem Schritt des Abtastens, unter Verwendung einer Scanner-Vorrichtung (2), dreidimensionaler Koordinaten von zwei oder mehr festgelegten Punkten, welche von einem Messarbeiter in einem dreidimensionalen Raum in Bezug auf das Messziel festgelegt wurden;
einem Schritt des Berechnens einer dreidimensionalen Messlinie (ML), welche die festgelegten Punkte in dem dreidimensionalen Raum verbindet, und einer Zeilenabtastung auf der dreidimensionalen Messlinie durch Ausgeben des Entfernungsmesslichts (270);
einem Schritt, in welchem nur Punktwolkendaten innerhalb eines vorbestimmten Entfernungsbereichs von der dreidimensionalen Messlinie (ML) in dem dreidimensionalen Raum extrahiert werden; und
einem Schritt des Bestimmens, unter Verwendung der extrahierten Punktwolkendaten, eines Bereichs, durch welchen Punkte voneinander beabstandet sind, als einen Elementabstand des Messziels, und eines Bereichs mit dichten Punkten als eine Elementdicke des Messziels, und des Berechnens numerischer Werte des Elementabstands und/oder der Elementdicke;
und einem Schritt des Anzeigens der numerischen Werte des Elementabstands und/oder der Elementdicke auf einer Anzeigeeinheit (22).

13. Computerprogramm, um das Ausführen des Messverfahrens nach Anspruch 12 zu ermöglichen, wenn es in einem Messsytem nach Anspruch 1 ausgeführt wird.

## Revendications

1. Système de mesurage (1, 1'), pour mesurer un espacement d'élément et une épaisseur d'élément d'un élément de construction sur un chantier de construction, comprenant
un dispositif de balayage (2) incluant une unité de mesure de distance (21) configurée pour effectuer un balayage d'une distance et d'un angle par rapport à un point de mesure en mesurant un temps pris pour un déplacement de va-et-vient entre une lumière de mesure de distance (270) et le point de mesure,
un ou plusieurs éléments de construction constituant une structure étant considérés comme une cible de mesure,
le système de mesurage (1,1') étant configuré pour :
balayer des coordonnées tridimensionnelles de deux points désignés ou plus par un préposé au mesurage sur un espace tridimensionnel par rapport à la cible de mesure,
calculer une ligne de mesurage tridimensionnelle (ML) reliant les points sur l'espace tridimensionnel et effectuer un balayage linéaire sur la ligne de mesure tridimensionnelle en délivrant en sortie la lumière de mesure de distance (270),
extraire uniquement des données de nuage de points dans une plage de distance prédéterminée à partir de la ligne de mesure tridimensionnelle (ML) sur l'espace tridimensionnel, et
en utilisant les données de nuage de points extraites, déterminer une zone via laquelle des points sont éloignés les uns des autres en tant qu'espacement d'élément de la cible de mesure, et déterminer une zone de points denses en tant qu'épaisseur d'élément de la cible de mesure, et calculer des valeurs numériques de l'espacement d'élément et/ou de l'épaisseur d'élément, et afficher les valeurs numériques de l'espacement d'élément et/ou de l'épaisseur d'élément sur une unité d'affichage (22).

2. Système de mesurage selon la revendication 1, le système de mesurage étant configuré pour continuer le mesurage de la ligne de mesurage tridimensionnelle de manière répétée et toujours mettre à jour et afficher les résultats de mesurage.

3. Système de mesurage selon la revendication 1, le système de mesurage étant configuré pour définir une pluralité des lignes de mesurage tridimensionnelles, et mesurer chacune des lignes de mesurage tridimensionnelles dans l'ordre.

4. Système de mesurage selon la revendication 1, le système de mesure étant configuré pour désigner trois points ou plus en tant que points désignés, calculer une section transversale définie par les points désignés sur l'espace tridimensionnel en tant que zone de mesurage, et effectuer le mesurage sans prisme de la zone de mesurage.

5. Système de mesurage selon la revendication 1, le système de mesurage étant configuré pour mesurer un point désigné temporaire qui devient le point désigné en étant étendu d'une distance connue le long d'une direction de ligne droite arbitraire tridimensionnelle, et calculer des coordonnées en tant que coordonnées tridimensionnelles du point désigné en corrigeant les coordonnées du point désigné temporaire par un cosinus de direction de la direction de ligne droite d'extension et la distance connue.

6. Système de mesurage selon la revendication 1, le système de mesurage étant configuré pour mesurer un point désigné temporaire différent uniquement dans la direction de hauteur à partir du point désigné, et calculer des coordonnées en tant que coordonnées tridimensionnelles du point désigné en modifiant la totalité ou au moins un des points désignés temporaires en termes de hauteur selon le point désigné.

7. Système de mesurage selon la revendication 1, le système de mesurage étant configuré pour définir des intervalles de mesurage du dispositif de mesure à des intervalles réguliers dans un espace réel sur la ligne de mesure tridimensionnelle.

8. Système de mesurage selon la revendication 1, le système de mesurage étant configuré pour afficher une alarme lorsque les résultats de mesurage sont anormaux par rapport à une valeur de conception.

9. Système de mesurage selon l'une quelconque des revendications 1 à 8, le dispositif de mesure étant un dispositif de balayage configuré pour effectuer une mesure de distance sans prisme en mesurant un temps pris pour un déplacement de va-et-vient entre la lumière de mesure de distance et le point de mesurage, et comprenant une unité de déviation configurée pour dévier une direction de sortie de la lumière de mesure de distance par rapport à un axe optique de référence.

10. Système de mesurage selon l'une quelconque des revendications 1 à 8, le dispositif de mesure étant un instrument d'arpentage capable d'effectuer une mesure de distance sans prisme à partir d'une différence de phase entre la lumière de mesure de distance réfléchie par le point de mesurage et la lumière de référence.

11. Système de mesurage selon la revendication 9 ou 10, le point désigné étant désigné par une cible configurée pour permettre l'observation de décalage du point désigné.

12. Procédé de mesure pour mesurer un espacement d'élément et une épaisseur d'élément d'un élément de construction sur un chantier de construction, comprenant :
une étape de désignation d'un ou de plusieurs éléments de construction constituant une structure considérés en tant que cible de mesure ;
une étape de balayage à l'aide d'un dispositif de balayage (2) des coordonnées tridimensionnelles de deux points désignés ou plus désignés par un préposé au mesurage sur un espace tridimensionnel par rapport à la cible de mesure ;
une étape de calcul d'une ligne de mesurage tridimensionnelle (ML) reliant les points désignés sur l'espace tridimensionnel et effectuer un balayage linéaire sur la ligne de mesure tridimensionnelle en délivrant en sortie la lumière de mesure de distance (270) ;
une étape d'extraction uniquement de données de nuage de points dans une plage de distance prédéterminée à partir de la ligne de mesure tridimensionnelle (ML) sur l'espace tridimensionnel ;
une étape consistant à utiliser les données de nuage de points extraites, à déterminer une zone via laquelle des points sont éloignés les uns des autres en tant qu'espacement d'élément de la cible de mesure, et à déterminer une zone de points denses en tant qu'épaisseur d'élément de la cible de mesure, et à calculer des valeurs numériques de l'espacement d'élément et/ou de l'épaisseur d'élément ; et
une étape consistant à afficher les valeurs numériques des résultats d'espacement d'élément et/ou d'épaisseur d'élément sur une unité d'affichage (22).

13. Programme informatique pour permettre l'exécution du procédé de mesure selon la revendication 12 lorsqu'il est effectué sur un système de mesure selon la revendication 1.
